# EUROPEAN PATENT SPECIFICATION

(11) **EP 4 079 161 B1**
(45) Date of publication and mention of the grant of the patent: **09.08.2023**
(21) Application number: 21179174.4
(22) Date of filing: 14.06.2021
(51) Int. Cl.: A23K 50/10, A23K 50/30, A23K 10/30, A23K 40/00

(54) **RAPESEED MEAL**
RAPSSCHROT
TOURTEAU DE COLZA

(43) Date of publication of application: 26.10.2022
(73) Proprietor: DSM IP Assets B.V., 6411 TE Heerlen (NL)
(72) Inventor: VAN BECKHOVEN, Rudolf Franciscus Wilhelmus C., 6100 AA Echt (NL); SMOLDERS, Gerardus Johannes Franciscus, 6100 AA Echt (NL)
(74) Representative: DSM Intellectual Property

(56) References cited:
- WO-A1-03/028473
- WO-A1-2008/144939
- WO-A1-2018/007494

## Description

### Field of the invention

The present invention relates to a protein depleted rapeseed meal composition and the use thereof. According to another aspect the present invention relates to a method for manufacturing a protein depleted rapeseed meal.

### Background of the invention

Protein is a main feature of human nutrition. This may be sourced from animals (e.g. meat, fish, egg, dairy) or vegetables. There is a general desire to reduce the amount of animal based protein. The use of egg protein is often undesirable. For example, due to problems with egg allergies, medical problems associated with cholesterol levels in eggs, religious restrictions/convictions, culinary preferences (such as, for example, a vegetarian or a vegan diet), cost fluctuations in the price of eggs, use of antibiotics and hormones in poultry production, and diseases associated with poultry (such as, for example, bird flu), the use of alternative proteins may be desired. The use of vegetable based protein in human nutrition is known, for example WO 2008/094434 discloses the use of wheat protein isolates as an alternative to the use of egg yolk protein in compositions. However, the use of wheat protein isolates may not be desirable for those with gluten allergies. The use of soy based protein instead of whey protein has also been described for example in WO 2014/018922. Soy protein is widely used, however in view of some intolerances to soy products there is a need to find other sources of vegetable proteins.

Suitable alternatives include pea protein and rapeseed protein. Rapeseed seeds are rich in high quality oil and contain considerable amounts of protein that accounts for 17 to 25% of seed dry weight. The two major type of storage proteins in rapeseed are the 2S albumin (napin) and the 12S globulin (cruciferin). They constitute 20 and 60% respectively of the total protein in mature seeds. Processing rapeseed for oil for human consumption produces rapeseed meal as a byproduct which contains about 30 to 40% protein. The resultant rapeseed meal is currently used as a high-protein animal feed.

Traditionally, for materials having relatively high oil content (>35% on dry matter, rapeseed is ~40%), a combination of mechanical pressing and solvent extraction is used for efficient extraction of the oil (Rosenthal et al., Enzyme and Microbial Technology 19 (1996) 402-420). During a first mechanical pressing step the amount of oil is reduced from around 40% to 20-25%, followed by hexane defatting to reduce oil contents to 1-5%. After oil extraction, the pressed material is heat treated to remove the solvent, resulting in a meal (also referred to as cake) with an oil and protein content of 1-5% and 40-50% of the dry matter, respectively. Although the meal has a relative high protein content, the quality is reduced significantly resulting from the harsh conditions (i.e., elevated temperature, solvents) employed during the oil extraction resulting in denaturation of the proteins and impurities from remaining solvents. The awareness that these oil extraction conditions are detrimental for the quality of the proteins is one of the factors bolstering the improvement of the cold pressing technology. During cold-pressing, no solvents (like e.g. hexane) are used and the oil is pressed out under mild conditions, resulting in better quality oil and a rapeseed meal of higher quality containing proteins in their native form. This rapeseed meal has a relatively high oil content (typically >8%, for example >10%, on dry matter basis) and is an excellent source of proteins with preserved functionality. These proteins can be extracted from the meal by for instance an aqueous extraction (Rosenthal et al., Enzyme and Microbial Technology 19 (1996) 402-420, Rosenthal et al., Trans iChemE, Part C, 76 (1998) 224-230 and Lawhon et al., J. Food Sci. 46 (1981) 912-916).

WO2018/007494 discloses a method for the preparation of rapeseed protein isolate from cold-pressed rapeseed oil seed meal.

Cold pressing of rapeseed seeds is gaining popularity in view of the gentle conditions that preserve the proteins in their native state. The disadvantage of cold pressing is the high amounts of oil (10 to 12% w/w) in the cold-pressed meal, which is thus not available as oil yield. Hence, there is a need in the art for solutions to efficiently use the oil.

Animals require vitamins, minerals, protein, carbohydrate, oil and fiber in their diet. A potential source for animal feed is rapeseed (*Brassica napus*)*.* Following harvesting, rapeseed can be utilized as animal feed. Alternatively, the edible vegetable rapeseed oil is isolated from the rapeseed by means of cold-pressing or grinding and extracting with an organic solvent. The resulting rapeseed meal is a high-protein animal feed. Rapeseed meal resulting from hexane extraction contains, based on dry matter content, 35 to 40% (w/w) of protein and <1% (w/w) of oil. When cold-pressed, the resulting meal (or cake) typically contains, based on dry matter content, 28 to 40% (w/w) of protein and 10 to 12% (w/w) of oil. Rapeseed meal is included in animal feed in percentages ranging up to 25% for dairy and beef ruminants and thus forms a valuable source for animal feed. However, the presence of glucosinolates significantly lowers the nutritional value or rapeseed meal for animal feed.

Oil is a desirable component in most animal diets since it serves as energy source and impacts quality and quantity of milk production in dairy animals and meat production in slaughter animals. For example, US 2010330251 describes extruded livestock animal feed particles with a fat content of at least 45% (w/w). A process for producing animal feeds is described in CA 2319978 wherein a rapeseed-derived product is described that comprises from 15-25% (w/w) of protein and from 6.5-10.5% (w/w) of fat.

Feeding concentrates obtained by crushing rapeseed which are both high in protein (30-50% (w/w)) and high in fat are described in several documents such as CN 105918637, CN 105918638, DE 19516982, DE 202015005535 and DE 202016003464. These feeding concentrates are further processed by mixing with other feeds such as bean meal, corn or grass silage, grease or hay. Preparing feed obtained from whole rapeseeds, being both high in fat and protein results in poor digestibility in animals, a problem that was solved in US 5,662,958 by treating the seeds with alkali at elevated temperatures, however lowering the quality of the proteins and forming oxidized byproducts. WO 2015101650 describes the application of filamentous fungi for treatment of by-products of plants, e.g. crushed rapeseeds high in both fat and protein, prior to applying as feed. However, the additional (lengthy) fermentation consumes carbohydrates and other nutrients naturally present in rapeseed, limiting the nutritional value.

Hence, there is a need in the art for a more efficient use of the oil available in cold pressed rapeseed meal.

### Detailed description of the invention

The present invention relates to a protein depleted rapeseed meal comprising, based on dry matter content, from 20 to 35% (w/w) of protein and from 15 to 35% (w/w) of oil (or fat), wherein said meal comprises a total amount of (soluble) cruciferins and napins of less than 1% (w/w). Preferably and amount of water soluble cruciferins and napins of less than 1% (w/w).

It has been found that the protein depleted rapeseed meal of the present invention has a relatively high oil content that is beneficial for the further use. First of all, the oil content of more than 20% is equal as the oil content of conventionally pressed oil seeds, before the hexane defatting step. Hence, this present protein depleted rapeseed meal can be efficiently blended with conventional oil pressing and hexane defatting processed, thereby increasing the yield in oil, without compromising the yield in native napins and cruciferins.

Additionally, the present rapeseed meal can be used as improved animal feed, providing high amount of edible oil. This comes with many advantages. For example, an higher amount of oil provides an increased juiciness and thus palatability of the animal feed. Further, an higher oil content allows for better incorporation of water insoluble vitamins, like vitamine E, and hence provides an improved bioavailability and better fortification.

The term 'rapeseed meal' as used in the present context means the rapeseed product obtained after treatment for removal of the oil, like cold pressing of the rapeseeds.

The term 'protein depleted rapeseed meal' as used in the present context means the washed and isolated rapeseed meal resulting from a process to extract napins and cruciferins from the rapeseed meal. Hence, the term 'protein depleted rapeseed meal' does not mean that the present meal does not comprise proteins. Alternatively, the present protein depleted rapeseed meal can also be named a 'cruciferin and/or napin depleted rapeseed meal' as the cruciferins and napins are the proteins extracted to form the protein depleted rapeseed meal.

In a preferred embodiment, the present invention relates to a protein depleted rapeseed meal comprising, based on dry matter content, from 20 to 35% (w/w) of protein and from 15 to 35% (w/w) of oil (or fat), wherein said meal comprises a total amount of cruciferins and napins of less than 1% (w/w).

In an embodiment, the present protein depleted rapeseed meal is derived from cold pressed rapeseed meal. This means that the present meal is the result of a cold pression oil removal process, and not an hexane and/or heat treated process. Accordingly, the present protein depleted rapeseed meal preferably does not comprise solvents, like hexane, methanol, isopropanol and/or ethanol.

In a preferred embodiment the cold pressed rapeseed meal is derived from non-GM rapeseed. This means that the present protein depleted rapeseed meal is non-GM.

As said above, the present protein depleted rapeseed meal comprises proteins. Preferably, the proteins are in native form. Preferably, the proteins are oleosins, lipid transfer proteins, protease inhibitors, Ca+2 dependant-calmodulin binding proteins and dehydrins. Preferably the present protein depleted rapeseed meal comprises oleosins, or the protein in the present protein depleted rapeseed meal is substantially oleosins.

In an embodiment, the present protein depleted rapeseed meal comprises, based on product dry matter content, from 1 to 20% (w/w) carbohydrates, preferably 5 to 15% (w/w) carbohydrates. Preferably the carbohydrates are selected from cellulose, hemicellulose and pectin. The advantage of the presence of carbohydrates is that they will be the substrates for the microbiota in the gastrointestinal tract (stimulating their growth, and enhancing production of immuno-health stimulating SCFAs). Furthermore, carbohydrates will be useful as carbon (and energy) source for silaging. Further, carbohydrates are useful for structuring the animal feed during extrusion processing.

In an embodiment, the present protein depleted rapeseed meal comprises, based on dry matter content, less than 0.9% (w/w) (soluble) cruciferins and napins. Meaning the sum of cruciferins and napins is less than 0.9% (w/w). Preferably, less than 0.8% (w/w), 0.7% (w/w), 0.6% (w/w), 0.5% (w/w), 0.4% (w/w), 0.3% (w/w), 0.2% (w/w) or even less than 0.1% (w/w).

Preferably, the present amount of cruciferin and napins is the amount of soluble cruciferin and napin. Preferably the amount of (soluble) cruciferin and napin is determined by size-exclusion chromatography.

In an embodiment, the present protein depleted rapeseed meal comprises a ratio, on weight basis, of cruciferin to napin in the range of from 1 cruciferin to 0.5 napin to 1 cruciferin to 1.5 napin.

In an embodiment, the present protein depleted rapeseed meal comprises a ratio of cruciferin to napin of at least 5 cruciferin to 1 napin or comprising a ratio of cruciferin to napin of 1 cruciferin to at least 5 napin.

In an embodiment, the present protein depleted rapeseed meal comprises a ratio of cruciferin to napin of at least 9 cruciferin to 1 napin or comprising a ratio of cruciferin to napin of 1 cruciferin to at least 9 napin. Such as cruciferin:napin from 8:1 to 1:8, such as 7:1 to 1:7, such as 6:1 to 1:6, such as 5:1 to 1:5, such as 4:1 to 1:4, such as 3:1 to 1:3.

In an embodiment, the present protein depleted rapeseed meal comprises, based on dry matter content, from 20 to 30% (w/w) of (soluble) protein and/or from 20 to 30% (w/w) of oil (or fat). Alternatively, the present protein depleted rapeseed meal comprises, based on dry matter content, from 15 to 30% (w/w) of oil (or fat).

Preferably, the present protein depleted meal comprises, based on dry matter content from 24 to 28% (w/w) of (soluble) protein and/or from 20 to 25% (w/w) of oil (or fat).

Alternatively, the present protein depleted rapeseed meal comprises, based on dry matter content from 20 to 30% (w/w) of (soluble) protein and/or from 20 to 25% (w/w) of oil (or fat).

In an embodiment, the present protein depleted rapeseed meal has a dry matter content from 20 to 30% (w/w). Preferably the dry matter content is from 21 to 29%, 22 to 28%, 23 to 27% or 24 to 26%. The advantage of the indicated dry matter content is that no energy intensive drying techniques are required. Further advantage is that a water content of 70 to 80% (w/w) allows for potential other treatments of the protein depleted rapeseed meal, like silaging, enzymatic processing, high moisture extrusion and fortification.

In an embodiment, the present protein depleted rapeseed meal comprises, based on dry matter content, from 30 to 70% (w/w) seed hulls, preferably from 40 to 60% seed hulls. The seed hulls are derived from the rapeseed oil seeds are rich in fibers such as lignin. It is advantageous to incorporate the hulls in the present protein depleted rapeseed meal in that it provides a source of fibers that are beneficial for the gastrointestinal track of cattle. Fibers are immuno-stimulating due to growth of and fermentation by microbiota that generate SCFAs. Further, hulls also function as a carrier during extrusion of the meal into feed pellets and thus improve the use of the present protein depleted rapeseed meal.

In a further preferred embodiment, the present protein depleted rapeseed meal comprises, based on dry matter content, an amount of glucosinolates of less than 1% (w/w). Preferably an amount of glucosinolates of less than 0.5% (w/w), or even less than 0.1 % (w/w). Alternatively, the present protein depleted rapeseed meal hardly comprises any glucosinolates, or is substantially free from glucosinolates. This is advantages in that glucosinolates are an undesired substance in animal feed, and thus a composition free from glucosinolates is an improved composition in that it can be used in more applications, like in animal feed. Glucosinolates (alkyl aldoxime-O-sulphate esters with a ß-D-thioglucopyranoside group) are present in all parts of the rapeseed (or Canola) plant. The highest concentrations are found in the seeds. Glucosinolates and their breakdown products determine the typical mustard taste of vegetables belonging to the *Brassica* species. The mustard like taste is not desired by animals, and particularly not in aquaculture which are very sensitive to this taste. Hence, the present invention provides an improved animal feed.

The present invention also relates to the use of the present protein depleted rapeseed meal, as an ingredient in animal feed. Given the higher amounts of oil when compared to cold pressed cake or hexane treated cake, the animal feed is more rich in oil. The animal feed is preferably suitable for consumption by ruminants, pigs and/or poultry.

In an embodiment, the present protein depleted rapeseed meal comprises, based on dry matter content, an amount of phytic acid, sinapine or sinigrin of less than 1% (w/w). Hence, each of the phytic acid, sinapine or sinigrin is present in an amount of less than 1% (w/w). Preferably an amount less than 0.5% (w/w), or even less than 0.1% (w/w).

The present invention also relates to the use of the present protein depleted rapeseed meal for further extraction of oil from the protein depleted rapeseed meal. Given the higher amounts of oil, the present protein depleted rapeseed meal can advantageously be used to harvest the oil present in the meal. This can for example be done by subjecting the protein depleted rapeseed meal towards a heat and/or solvent treatment if the primary purpose is to increase the oil yield. For example the present protein depleted rapeseed meal can be defatted by subjecting to hexane. Alternatively, this use can for example be done by subjecting the protein depleted rapeseed meal to cold pressing to harvest the oil.

According to another aspect, the present invention relates to a method for manufacturing a protein depleted rapeseed meal as defined herein, comprising the steps of:
(i) extracting cold-pressed rapeseed meal with water to form a slurry;
(ii) transporting the slurry to a vacuum belt filter;
(iii) transporting the slurry on the vacuum belt filter while washing and collecting aqueous protein solution, resulting a protein depleted rapeseed meal;
(iv) optionally collecting the protein depleted rapeseed meal;
wherein the belt filter is rolling at a speed resulting in a protein depleted rapeseed meal having a thickness within the range of 3 to 25 mm, when measured at the end of the belt filter. Preferably the belt filter is rolling at a speed resulting in a protein depleted rapeseed meal having a thickness within the range of 4 to 20 mm, such as from 5 to 18 mm, 6 to 16 mm or even 7 to 15 mm.

Surprisingly the present inventors found that maintaining a certain thickness of the slurry layer on the filter cloth of the belt filter results in a higher yield in oil (or fat) in the protein depleted rapeseed mail.

The term slurry as used herein means the extraction liquid combined with the cold-pressed rapeseed meal.

Preferably the vacuum belt filter comprises a filter cloth having a mesh size within the range of 1 to 100µm, preferably within the range of 10 to 60µm, more preferably within the range of 20 to 40µm.

In an embodiment, present step (iii) comprises setting the belt speed of the vacuum belt filter to a speed resulting in a protein depleted rapeseed meal having a thickness within the range of 3 to 25 mm, when measured at the end of the belt filter. Preferably a belt speed resulting in a protein depleted rapeseed meal having a thickness within the range of 4 to 20 mm, such as from 5 to 18 mm, 6 to 16 mm or even 7 to 15 mm. Hence, the present method may comprise adjusting of the belt speed depending on the amount of slurry resulting from extracting step (i) to result in the protein depleted rapeseed meal having the indicated thickness.

Step (iii) comprises collecting aqueous protein solution. Preferably this is collecting the aqueous protein solution by the vacuum applied to the vacuum belt filter. Preferably the aqueous protein solution is collected at the lower side of the vacuum belt filter or filter cloth.

In an embodiment, step (iii) comprises washing the slurry on the vacuum belt filter, preferably by spraying water on the (upper surface) of the slurry.

In a preferred embodiment, the present collected protein depleted rapeseed meal has a thickness within the range of 3 to 25 mm, preferably within the range of 4 to 20 mm, such as from 5 to 18 mm, 6 to 16 mm or even 7 to 15 mm.

In an embodiment, the present aqueous protein solution comprises an amount of oil (or fat) of less than 15% (w/w), preferably less than 10, less than 8, less than 6, less than 4 or less than 3% (w/w). More preferably, the present aqueous protein solution comprise 40 to 65 wt.% cruciferins and 35 to 60 wt.% napins on dry matter of the protein solution.

The invention is further illustrated in the non-limiting examples below.

### EXAMPLES

### Test methods

### Protein content

Protein content was determined by combustion according to the Dumas principle, using a conversion factor of 6.25 to determine the amount of protein (%(w/w)).

### Glucosinolates

Glucosinolates were measured according to method EEC 1864/90.

### Fat content

Fat content is determined in Comparative Example 1 using Soxhlet extraction of HCl pre-hydrolyzed samples with petroleum ether 40-65°C according to NEN-ISO 1443.

Fat content is determined in example 2 using FAME, with total fat expressed as triglycerides.

### Quantification of (soluble) cruciferin and napin proteins

The cruciferin and napin content was determined by Size Exclusion Chromatography (SEC) analysis. Samples were dissolved to a protein concentration of approximately 1 mg/mL in a 500 mM sodium chloride saline solution, and after 1h at ambient temperature, were centrifuged at 20,817 rcf. Supernatants were analyzed by HP-SEC using as mobile phase the same saline solution as for sample preparation. Quantification was done by measuring UV absorbance at 220 nm and using bovine serum albumin as an external standard.

### Example 1

### Preparation of protein depleted rapeseed meal from cold-pressed rapeseed meal

The protein depleted rapeseed meal was produced from cold-pressed rapeseed meal having an oil content of less than 15%, a cruciferin-napin content of more than 10% on dry matter basis, cleaned and processed below 75°C. As extraction step, the cold-pressed rapeseed meal was mixed with an aqueous salt solution (2% sodium chloride), at a temperature between 40 to 75°C, by swirling the container wherein the mixture was placed without any mechanical stirring. The meal to aqueous salt solution ratio was in the range of from 1:5 to 1:20. After about 30 minutes to 1 hour the extraction slurry was transferred to a vacuum belt filter having a filter cloth 30 µm to separate the protein rich solution (extract) was separated from the insoluble material. The slurry was washed with water. The belt filter was rolling at a speed resulting in a thickness of protein depleted rapeseed meal of 5 mm. The resulting protein depleted rapeseed meal was subsequently analyzed for dry matter, cruciferin and napin content, protein content (according to nitrogen) and fat content.

### Comparative Example 1

### Preparation of protein depleted rapeseed meal from cold-pressed rapeseed meal using stirring

At the same temperature as used in Example 1, cold-pressed rapeseed meal having an oil content of less than 15% on dry matter basis, was mixed with an aqueous salt solution (2% sodium chloride), and after about 30 minutes to 1 hour the protein rich solution (extract) was separated from the insoluble material. However, compared to Example 1, during extraction the aqueous salt solution was rigorous mixed with a magnetic stirrer for 30 minutes followed by separation using centrifugation at 4,000 rpm for 15 minutes in a Thermo Scientific Megafuge 40R.

Subsequently, the solid material was washed with water to yield protein depleted rapeseed meal which was subsequently analyzed for dry matter, cruciferin napin, protein content (according to nitrogen) and fat content.

Together with the material from Example 1 this gave the following results:

| Entry | Sample | Fat (% w/w dry matter) | Dry matter | Glucosinolates (% w/w dry matter) | Cruciferin + Napin (% w/w dry matter) | Protein (NDumas) (% w/w dry matter) |
|---|---|---|---|---|---|---|
| 1 | Cold-pressed rapeseed meal (starting material) | 10.3 ± 0.2 | 93% | 6.3 | 17.0 | 31.3 ± 0.2 |
| 2 | Example 1 | 21.0 ± 0.3 | 25% | 0 | 0.02 | 26.0 ± 0.2 |
| 3 | Comparative Example 1) | 9.7 ± 0.3 | 25% | 1.05 | 0.02 | 27.0 ± 0.2 |

From these data it was concluded that extraction without mechanical agitation followed by filtration and washing (entry 2) resulted in a high retention of fat in the solid fraction (or a low extraction of fat into the aqueous phase) compared to extraction with mechanical stirring whether followed by centrifugation (entry 3).

### Example 2

### Preparation of protein depleted rapeseed meal from cold-pressed rapeseed meal

The process of example 1 was repeated, however wherein the extraction slurry was transferred to the belt filter rolling on various belt speed, resulting in a layer on the filter cloth of 5 or 12mm thickness measured at the end of the belt filter. The protein depleted rapeseed meal and aqueous protein solution were collected and analyzed for fat content using FAME fat analysis. The results are shown in the table below.

| Amount of fat in | 5 mm layer | | | 12 mm layer | | |
|---|---|---|---|---|---|---|
| Extraction slurry (mg/kg) | 11500 | 10100 | 10400 | 9511 | 10115 | 11748 |
| Aqueous protein solution (mg/kg) | 468 | 397 | 852 | 241 | 296 | 316 |
| % of fat resulting in protein extract | 4.1 | 3.9 | 8.2 | 2.5 | 2.9 | 2.7 |

## Claims

1. A protein depleted rapeseed meal comprising, based on dry matter content, from 20 to 35% (w/w) of protein and from 15 to 35% (w/w) of oil, wherein said meal comprises a total amount of cruciferins and napins of less than 1% (w/w).

2. Protein depleted rapeseed meal according to claim 1, comprising, based on dry matter content, from 20 to 30% (w/w) of protein and from 20 to 30% (w/w) of oil.

3. Protein depleted rapeseed meal according to claim 1, comprising, based on dry matter content, from 24 to 28% (w/w) of protein and from 20 to 25% (w/w) of oil.

4. Protein depleted rapeseed meal according to any one of claims 1 to 3, wherein the dry matter content is from 20 to 30% (w/w).

5. Protein depleted rapeseed meal according to any of the preceding claims, wherein the proteins are in native form.

6. Protein depleted rapeseed meal according to any of the preceding claims, comprising, based on dry matter content, from 30 to 70% (w/w) seed hulls.

7. Protein depleted rapeseed meal according to any of the preceding claims, comprising, based on dry matter content, from 1 to 20% (w/w) carbohydrates.

8. Protein depleted rapeseed meal according to any of the preceding claims, comprising, based on dry matter content, an amount of glucosinolates of less than 1% (w/w).

9. Protein depleted rapeseed meal according to any of the preceding claims, comprising, based on dry matter content, an amount of phytic acid, sinapine or sinigrin of less than 1% (w/w).

10. Use of a protein depleted rapeseed meal as defined in any of the preceding claims, as an ingredient in animal feed.

11. Use of a protein depleted rapeseed meal as defined in any of the preceding claims for extraction of oil from the protein depleted rapeseed meal.

12. Method for manufacturing a protein depleted rapeseed meal according to any of the preceding claims, comprising the steps of:
(i) extracting cold-pressed rapeseed meal with water to form a slurry;
(ii) transporting the slurry to a vacuum belt filter;
(iii) transporting the slurry on the vacuum belt filter while washing and collecting aqueous protein solution, resulting a protein depleted rapeseed meal;
(iv) optionally collecting the protein depleted rapeseed meal;
wherein the belt filter is rolling at a speed resulting in a protein depleted rapeseed meal having a thickness within the range of 3 to 25 mm, when measured at the end of the belt filter.

13. Method according to claim 12, wherein step (iii) comprises setting the belt speed of the vacuum belt filter to a speed resulting in a protein depleted rapeseed meal having a thickness within the range of 3 to 25 mm, when measured at the end of the belt filter.

14. Method according to claim 12 or 13, wherein the collected protein depleted rapeseed meal has a thickness within the range of 3 to 25 mm.

15. Method according to any of the claims 12 to 14, wherein the aqueous protein solution comprises an amount of fat of less than 15% (w/w).

## Patentansprüche

1. Proteinreduziertes Rapsschrot, umfassend, bezogen auf den Trockenmassegehalt, von 20 bis 35 % (Gew./Gew.) Protein und von 15 bis 35 % (Gew./Gew.) Öl, wobei das Schrot eine Gesamtmenge von Cruciferinen und Napinen von weniger als 1 % (Gew./Gew.) umfasst.

2. Proteinreduziertes Rapsschrot gemäß Anspruch 1, umfassend, bezogen auf den Trockenmassegehalt, von 20 bis 30 % (Gew./Gew.) Protein und von 20 bis 30 % (Gew./Gew.) Öl.

3. Proteinreduziertes Rapsschrot gemäß Anspruch 1, umfassend, bezogen auf den Trockenmassegehalt, von 24 bis 28 % (Gew./Gew.) Protein und von 20 bis 25 % (Gew./Gew.) Öl.

4. Proteinreduziertes Rapsschrot gemäß einem der Ansprüche 1 bis 3, wobei der Trockenmassegehalt von 20 bis 30 % (Gew./Gew.) beträgt.

5. Proteinreduziertes Rapsschrot gemäß einem der vorstehenden Ansprüche, wobei die Proteine in nativer Form vorliegen.

6. Proteinreduziertes Rapsschrot gemäß einem der vorstehenden Ansprüche, umfassend, bezogen auf den Trockenmassegehalt, von 30 bis 70 % (Gew./Gew.) Samenhülsen.

7. Proteinreduziertes Rapsschrot gemäß einem der vorstehenden Ansprüche, umfassend, bezogen auf den Trockenmassegehalt, von 1 bis 20 % (Gew./Gew.) Kohlenhydrate.

8. Proteinreduziertes Rapsschrot gemäß einem der vorstehenden Ansprüche, umfassend, bezogen auf den Trockenmassegehalt, eine Menge an Glucosinolaten von weniger als 1 % (Gew./Gew.).

9. Proteinreduziertes Rapsschrot gemäß einem der vorstehenden Ansprüche, umfassend, bezogen auf den Trockenmassegehalt, eine Menge an Phytinsäure, Sinapin oder Sinigrin von weniger als 1 % (Gew./Gew.).

10. Verwendung eines proteinreduzierten Rapsschrots gemäß einem der vorstehenden Ansprüche als Bestandteil von Tierfutter.

11. Verwendung eines proteinreduzierten Rapsschrots gemäß einem der vorstehenden Ansprüche zur Extraktion von Öl aus dem proteinreduzierten Rapsschrot.

12. Verfahren zur Herstellung eines proteinreduzierten Rapsschrots gemäß einem der vorstehenden Ansprüche, umfassend die Schritte:
(i) Extrahieren von kaltgepresstem Rapsschrot mit Wasser, um eine Aufschlämmung zu bilden;
(ii) Befördern der Aufschlämmung zu einem Unterdruckbandfilter;
(iii) Befördern der Aufschlämmung auf dem Unterdruckbandfilter unter Waschen und Sammeln von wässriger Proteinlösung, um ein proteinreduziertes Rapsschrot zu erhalten;
(iv) gegebenenfalls Sammeln des proteinreduzierten Rapsschrots;
wobei sich der Bandfilter mit einer Geschwindigkeit bewegt, die ein proteinreduziertes Rapsschrot mit einer Dicke in dem Bereich von 3 bis 25 mm, wenn gemessen am Ende des Bandfilters, ergibt.

13. Verfahren gemäß Anspruch 12, wobei Schritt (iii) Einstellen der Bandgeschwindigkeit des Unterdruckbandfilters auf eine Geschwindigkeit umfasst, die ein proteinreduziertes Rapsschrot mit einer Dicke in dem Bereich von 3 bis 25 mm, wenn gemessen am Ende des Bandfilters, ergibt.

14. Verfahren gemäß Anspruch 12 oder 13, wobei das gesammelte proteinreduzierte Rapsschrot eine Dicke in dem Bereich von 3 bis 25 mm aufweist.

15. Verfahren gemäß einem der Ansprüche 12 bis 14, wobei die wässrige Proteinlösung eine Menge an Fett von weniger als 15 % (Gew./Gew.) umfasst.

## Revendications

1. Tourteau de colza appauvri en protéines comprenant, sur la base d'une teneur en matière sèche, de 20 à 35 % (p/p) de protéines et de 15 à 35 % (p/p) d'huile, ledit tourteau comprenant une quantité totale de cruciférines et de napines de moins de 1 % (p/p).

2. Tourteau de colza appauvri en protéines selon la revendication 1, comprenant, sur la base d'une teneur en matière sèche, de 20 à 30 % (p/p) de protéines et de 20 à 30 % (p/p) d'huile.

3. Tourteau de colza appauvri en protéines selon la revendication 1, comprenant, sur la base d'une teneur en matière sèche, de 24 à 28 % (p/p) de protéines et de 20 à 25 % (p/p) d'huile.

4. Tourteau de colza appauvri en protéines selon l'une quelconque des revendications 1 à 3, la teneur en matière sèche étant de 20 à 30 % (p/p).

5. Tourteau de colza appauvri en protéines selon l'une quelconque des revendications précédentes, les protéines étant sous forme native.

6. Tourteau de colza appauvri en protéines selon l'une quelconque des revendications précédentes, comprenant, sur la base d'une teneur en matière sèche, de 30 à 70 % (p/p) de coques de graines.

7. Tourteau de colza appauvri en protéines selon l'une quelconque des revendications précédentes, comprenant, sur la base d'une teneur en matière sèche, de 1 à 20 % (p/p) de glucides.

8. Tourteau de colza appauvri en protéines selon l'une quelconque des revendications précédentes, comprenant, sur la base d'une teneur en matière sèche, une quantité de glucosinolates de moins de 1 % (p/p).

9. Tourteau de colza appauvri en protéines selon l'une quelconque des revendications précédentes, comprenant, sur la base d'une teneur en matière sèche, une quantité d'acide phytique, de sinapine ou de sinigrine de moins de 1 % (p/p).

10. Utilisation d'un tourteau de colza appauvri en protéines tel que défini dans l'une quelconque des revendications précédentes, comme un ingrédient dans un produit alimentaire pour animaux.

11. Utilisation d'un tourteau de colza appauvri en protéines tel que défini dans l'une quelconque des revendications précédentes pour une extraction d'huile à partir du tourteau de colza appauvri en protéines.

12. Procédé pour la fabrication d'un tourteau de colza appauvri en protéines selon l'une quelconque des revendications précédentes, comprenant les étapes de :
(i) extraction d'un tourteau de colza pressé à froid avec de l'eau pour former une suspension ;
(ii) transport de la suspension vers un filtre à bande sous vide ;
(iii) transport de la suspension sur le filtre à bande sous vide tout en lavant et en collectant une solution aqueuse de protéines, résultant en un tourteau de colza appauvri en protéines ;
(iv) éventuellement collecte du tourteau de colza appauvri en protéines ;
le filtre à bande roulant à une vitesse fournissant un tourteau de colza appauvri en protéines ayant une épaisseur à l'intérieur de la plage de 3 à 25 mm, lorsqu'elle est mesurée à la fin du filtre à bande.

13. Procédé selon la revendication 12, l'étape (iii) comprenant la fixation de la vitesse de bande du filtre à bande sous vide à une vitesse fournissant un tourteau de colza appauvri en protéines ayant une épaisseur à l'intérieur de la plage de 3 à 25 mm, lorsqu'elle est mesurée à la fin du filtre à bande.

14. Procédé selon la revendication 12 ou 13, le tourteau de colza appauvri en protéines collecté ayant une épaisseur à l'intérieur de la plage de 3 à 25 mm.

15. Procédé selon l'une quelconque des revendications 12 à 14, la solution aqueuse de protéines comprenant une quantité de graisse de moins de 15 % (p/p).
